# EUROPEAN PATENT SPECIFICATION

(11) **EP 4 232 109 B1**
(45) Date of publication and mention of the grant of the patent: **23.04.2025**
(21) Application number: 20958868.0
(22) Date of filing: 21.10.2020
(51) Int. Cl.: C09D 11/108, C09D 11/102, C09D 11/36, C09D 11/328, C09D 11/38, A61L 29/08, A61L 29/14

(54) **FAST DRYING INKJET INKS WITH EXTENDED DECAP**
SCHNELL TROCKNENDE TINTENSTRAHLTINTEN MIT VERLÄNGERTER ABLÖSUNG
ENCRES POUR JET D'ENCRE À SÉCHAGE RAPIDE À DÉCAPSULAGE PROLONGÉ

(43) Date of publication of application: 30.08.2023
(73) Proprietor: Kao Corporation, Chuo-Ku Tokyo 103-8210 (JP)
(72) Inventor: SANDKER, Daniel, Cincinnati, Ohio 45216 (US); MATSUMOTO, Yuta, Cincinnati, Ohio 45216 (US)
(74) Representative: Hoffmann Eitle
(86) International application number: PCT/US2020/056615
(87) International publication number: WO 2022/086517

(56) References cited:
- EP-A1- 2 920 256
- WO-A1-2019/185825
- WO-A1-2020/112127
- WO-A1-2020/112128
- US-A1- 2015 291 816
- US-A1- 2017 037 269
- ANONYMOUS: "Dimethyl carbonate ", WIKIPEDIA, 5 November 2020 (2020-11-05), XP055936219, Retrieved from the Internet <URL:https://en.wikipedia.org/w/index.php?title=Dimethyl_carbonate&oldid=987201667> [retrieved on 20220628]

## Description

### BACKGROUND OF THE INVENTION

### FIELD OF THE INVENTION

The present invention relates to inkjet inks, specifically inkjet inks that include (A) a terpene phenol resin having a hydroxyl value of 10 to 80 mgKOH/g and (B) a carbonate ester whose boiling point is less than 150 °C.

### DISCUSSION OF THE BACKGROUND

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Thermal inkjet (TIJ) printing is a desirable technology for printing, coding, and marking as it offers high print resolutions at lower costs than competing technologies in the field, such as continuous inkjet methods. In thermal inkjet printing processes, the print cartridges contain a series of tiny chambers, each containing a heater, which produce ink droplets from thermal vaporization of an ink solvent. In the jetting process, a resistor is heated rapidly to produce a vapor bubble (hence the phrase "bubble jet"), which subsequently ejects a droplet from the orifice. This process is extremely efficient and reproducible and modem TIJ printheads for industrial graphics applications are capable of generating uniform drops of 4 pL or smaller in volume at frequencies of 36 kHz or greater.

However, thermal inkjet printing can be troubled by poor reliability over time. For example, some inkjet inks suffer from short decap times, in which solvent losses due to prolonged exposure to air within an uncapped printhead leads to clogging/plugging of printhead nozzles, and thus unreliable ink jetting and image quality erosion over time. On the other hand, the use of special solvent systems with high boiling components devised to prevent such premature solvent losses in an uncapped printhead setting require extended drying times once the inks are applied and thus inefficient overall printing processes. Therefore, it is often difficult to counterbalance the need for long decap times (the need for a slow rate of solvent loss) and short drying times (the need for a fast rate of solvent loss).

In attempts to achieve a balance between decap times and dry times, several ink systems have been devised that use specific binder resins and/or humectants in low boiling organic solvents. For example, US2017/0037269 discloses an inkjet ink that includes a specialty blend of terpene phenol resin and/or a rosin ester compounded with a polyamide resin, and an alcohol solvent having 1 to 3 carbon atoms.

In another example, US2018/0251650 discloses a thermal inkjet ink composition formulated with volatile organic solvents (i.e., C₁-C₄ alcohols, C₃-C₆ ketones, C₃-C₆ esters, and C₄-C₈ ethers), binder resins, and humectants having a boiling point of greater than 160 °C.

In yet another example, GB2507727A discloses an inkjet ink that includes less than 50 wt. % of an organic solvent such as ethanol, at least 35 wt. % of a humectant having a boiling point of greater than 150 °C, a terpene phenol resin, and additional binder resins such as acrylic binder.

Even though improvements to decap performance may be achieved by utilizing specialty blends of binder resins and/or high boiling humectants for nozzle wetting such as those described above, the improvement with respect to decap in such ink systems still typically comes at the expense of ink dry times.

### SUMMARY OF THE INVENTION

In view of the forgoing, there is a need for inkjet inks that perform under extended decap conditions, and that do so without sacrificing ink dry time.

Accordingly, it is one object of the present invention to provide novel inkjet inks that meet these criteria.

It is another object of the present disclosure to provide novel printed articles which contain a dried form of the inkjet inks.

It is another object of the present disclosure to provide novel methods of forming a printed image on a substrate by applying the inkjet inks onto the substrate and drying.

These and other objects, which will become apparent during the following detailed description, have been achieved by the inventors' discovery that the combination of a terpene phenol resin having a hydroxyl value of 10 to 80 mgKOH/g and a carbonate ester whose boiling point is less than 150 °C provides inkjet inks characterized by extended decap times and fast drying times once applied.

### BRIEF DESCRIPTION OF THE DRAWINGS

The foregoing paragraphs have been provided by way of general introduction, and are not intended to limit the scope of the following claims. The described embodiments, together with further advantages, will be best understood by reference to the following detailed description when considered in conjunction with the accompanying drawings, wherein:

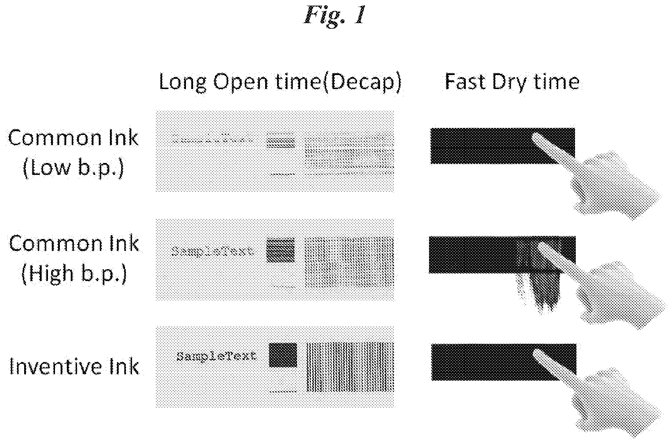

Fig. 1 is a decap and dry time testing comparison between (top row) a common ink which includes low boiling point components that is fast drying but suffers from poor decap behavior, (middle row) a common ink which includes high boiling point components that has good decap behavior but is slow drying, and (bottom row) an inventive ink with a combination of good decap behavior and fast drying properties;

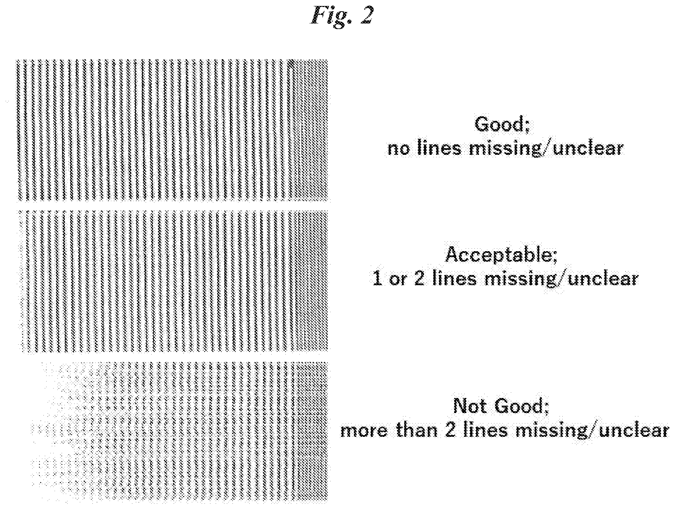

Fig. 2 illustrates the decap time evaluation for a "G" (Good) rating (no lines missing/unclear in a narrow line image), "A" (Acceptable) rating (1 or 2 lines missing/unclear in a narrow line image), and a "NG" (Not Good) rating (more than 2 lines missing/unclear in a narrow line image).

### DETAILED DESCRIPTION OF THE INVENTION

In the following description, it is understood that other embodiments may be utilized and structural and operational changes may be made without departure from the scope of the present embodiments disclosed herein.

The phrase "substantially free", unless otherwise specified, describes an amount of a particular component in the inkjet ink being less than 1 wt. %, preferably less than 0.5 wt. %, more preferably less than 0.1 wt. %, even more preferably less than 0.05 wt. %, yet even more preferably 0 wt. %, relative to a total weight of the inkjet ink.

As used herein, the terms "optional" or "optionally" means that the subsequently described event(s) can or cannot occur or the subsequently described component(s) may or may not be present (e.g., 0 wt. %).

The term "alkyl", as used herein, unless otherwise specified, refers to a straight, branched, or cyclic, aliphatic fragment having at least 1, preferably at least 2, preferably at least 3, preferably at least 4 carbon atoms and up to 22, preferably up to 20, preferably up to 18, preferably up to 12, preferably up to 8 carbon atoms. Examples of alkyl groups include, but are not limited to, methyl, ethyl, propyl, isopropyl, butyl, isobutyl, t-butyl, pentyl, isopentyl, neopentyl, hexyl, isohexyl, 3-methylpentyl, 2,2-dimethylbutyl, 2,3-dimethylbutyl, lauryl, myristyl, cetyl, stearyl, and the like, including guerbet-type alkyl groups (e.g., 2-methylpentyl, 2-ethylhexyl, 2-proylheptyl, 2-butyloctyl, 2-pentylnonyl, 2-hexyldecyl, 2-heptylundecyl, 2-octyldodecyl, 2-nonyltridecyl, 2-decyltetradecyl, and 2-undecylpentadecyl). Cycloalkyl is a type of cyclized alkyl group. Exemplary cycloalkyl groups include, but are not limited to, cyclopropyl, cyclobutyl, cyclopentyl, cyclohexyl, norbornyl, and adamantyl.

As used herein, the term "alkenyl", unless otherwise specified, refers to a linear, branched, or cyclic, aliphatic fragment having at least 2, preferably at least 3, preferably at least 4 carbon atoms and up to 22, preferably up to 20, preferably up to 18, preferably up to 12, preferably up to 8 carbon atoms, and which contains at least one site of unsaturation. Examples of alkenyl groups include, but are not limited to, vinyl, allyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl, 5-hexenyl, oleyl, linoleyl, and the like, including cycloalkenyl groups such as cyclopentenyl, cyclohexenyl, cycloheptenyl, and the like.

As used herein, the term "fatty" describes a compound with a long-chain (linear) hydrophobic portion made up of hydrogen and anywhere from 8 to 22 carbon atoms, which may be fully saturated or partially unsaturated.

As used herein, the term "aryl" refers to an aromatic group containing only carbon in the aromatic ring(s), such as phenyl, biphenyl, naphthyl, anthracenyl, and the like.

The term "arylalkyl", as used herein, refers to a straight, branched, or cyclic alkyl moiety (as defined above) that is substituted by an aryl group (as defined above) which may itself be optionally substituted by an alkyl group, examples of which include, but are not limited to, benzyl, phenethyl, 3-phenylpropyl, 2-phenylpropyl, 1-phenylpropyl, 4-phenylbutyl, 3-phenylbutyl, 2-phenylbutyl, 2-methylbenzyl, 3-methylbenzyl, 4-methylbenzyl, 2,4-dimethylbenzyl, 2-(4-ethylphenyl)ethyl, 3-(3-propylphenyl)propyl, and the like.

The term "(meth)acrylate" is used herein to refer to both acrylate and methacrylate groups. In other words, this term should be read as through "meth" is optional. Further, the term "(meth)acrylate" is used generally to refer to both acrylic acid-based compounds and acrylic ester-based compounds.

The term "decap behavior" refers to the ability of the inkjet ink to readily eject from the printhead, upon prolonged exposure to air. The inkjet ink "decap time" is measured as the amount of time that an inkjet printhead may be left uncapped before the printer nozzles no longer fire properly, potentially because of clogging or plugging when printing resumes. Generally, nozzle(s) may become clogged (i.e., impeded, slowed) or plugged (i.e., obstructed, substantially or completely closed) by a viscous plug that forms in the nozzle(s) as a result of solvent loss, crusting of the ink, and/or kogation of various ink components in and/or around any of the nozzles. If a nozzle has become clogged, ink droplets ejected through the nozzle's orifice may be misdirected, which may adversely affect print quality. When an orifice is plugged, it becomes substantially or completely blocked. As a result of the nozzle being plugged, the ink droplets may not pass through the affected nozzle. Thus, the criteria for measuring failure to fire by a nozzle is a misdirection of ink through the nozzle's orifice to a lesser or greater degree, or a complete blockage, which can be measured by visually inspecting a printed image.

Throughout the specification, the term "boiling point" (b.p.) refers to the boiling point of a liquid measured at sea-level atmospheric pressure (i.e., 760 mmHg or 1 atmosphere), also called the normal boiling point, unless specified otherwise.

### Inkjet inks

The present disclosure is directed to inkjet inks that possess suitable physical and chemical stability at both ambient temperatures and printhead operating temperatures, are jetted reliably, exhibit good adhesion to porous and non-porous substrates, and have prolonged decap times while still drying quickly after being applied onto a substrate (e.g., dry times of 15 seconds or less). The combination of ingredients disclosed herein has been surprisingly found to perform under extended decap conditions without sacrificing ink dry time.

Inkjet inks of the present disclosure generally include the following components: (A) a terpene phenol resin having a hydroxyl value of 10 to 80 mgKOH/g and (B) a carbonate ester whose boiling point is less than 150 °C, and may optionally include one or more of (C) ethanol, (D) an alkanolamine, (E) a silicone acrylate copolymer, (F) a colorant, and (G) an additive.

### (A) Terpene phenol resin

Terpene phenol resins (A) are the copolymeric reaction products from alkylation of one or more phenolic compounds with one or more terpenes, and have been used in inks and adhesives to provide a tackifier effect. As known by those of ordinary skill in the art, such resins may be readily obtained through copolymerization of a phenolic compound and a terpene monomer under the catalytic action of strong acids, metal salts having a condensing effect, bleaching earths, Friedel-Craft catalysts (e.g., boron trifluoride), and the like. While the terpene phenol resins (A) of the present disclosure may include small amounts of other constitutional units other than the constitutional units derived from phenolic compounds and constitutional units derived from terpene, the amount of other (e.g., non-phenol and non-terpene based) constitutional units is preferably less than 5 mol %, preferably less than 4 mol %, preferably less than 3 mol %, preferably less than 2 mol %, more preferably less than 1 mol %, even more preferably less than 0.5 mol %, yet even more preferably 0 mol %, based on the total constitutional units (100 mol%) of the terpene phenol resin (A).

The terpene phenol resins (A) utilized herein may be based on any terpene having at least one olefinic double bond that is capable of being alkylated by a phenolic compound. Terpenes have a basic skeleton (C₅H₈)ₚ where p is a positive integer that delineates the number of isoprene units that are successively bound head to tail. For example, hemiterpenes (p = 1) have a C₅H₈ skeleton, monoterpenes (p = 2) have a C₁₀H₁₆ skeleton, sesquiterpenes (p = 3) have a C₁₅H₂₄ skeleton, and so forth.

In some embodiments, the terpene phenol resin (A) is based on monoterpene monomer units. The monoterpene may be a linear monoterpene (e.g., myrcene, ocimene, etc.), a monocyclic monoterpenes (e.g., limonene, γ-terpinene, α-phellandrene, β-phellandrene, terpinolene, etc.), or a bicyclic monoterpene (e.g., 3-carene, α-pinene, β-pinene, α-fenchene, camphene, etc.), including the various stereoisomers thereof, as well as mixtures thereof. In some embodiments, the monoterpene is a monocyclic monoterpene, with particular preference to limonene. In preferred embodiments, the monoterpene is a bicyclic monoterpene, with particular preference to 3-carene, α-pinene, β-pinene, and camphene, more preferably α-pinene and/or β-pinene.

A phenolic compound has at least one hydroxyl group directly bonded to a phenyl ring. All mono- or polyvalent phenolic compounds are useful in the preparation of the terpene phenol resin described herein provided that the phenolic compound has at least two replaceable hydrogen atoms in ortho- and/or para-positions with respect to at least one hydroxyl group. That is, the phenolic compound should be capable of being polyalkylated (e.g., bis-alkylated) with the terpene(s), and thus should have at least two available ortho-/para-positions with respect to at least one hydroxyl group for alkylation.

In preferred embodiments, the phenolic compound is phenol, which is considered the parent unsubstituted phenolic compound (i.e., contains one hydroxyl group bonded directly to the phenyl ring with no other substitution). Alternatively, the phenolic compound may be substituted at up to three positions in addition to the phenolic hydroxyl group, wherein one, two or three of the aromatic hydrogens of phenol are replaced with an equal number of substituents, each independently selected from a hydroxyl group; a C₁-C₂₂ alkyl group, preferably a C₂-C₁₈ alkyl group, more preferably a C₃-C₁₂ alkyl group, even more preferably a C₄-C₉ alkyl group, for example, methyl, ethyl, n-propyl, isopropyl, n-butyl, isobutyl, tert-butyl; a C₁-C₂₂ alkoxy group, preferably a C₂-C₁₂ alkoxy group, more preferably a C₃-C₆ alkoxy group, for example, methoxy, ethoxy, and isopropoxy; an aryl group; an arylalkyl group, for example a benzyl group; and a halo group such as chlorine, bromine, fluorine and iodine.

Specific examples of substituted phenolic compounds include, but are not limited to, o-cresol, m-cresol, p-cresol, 2,5-xylenol, 2,3-xylenol, 3,4-xylenol, 3,5-xylenol, 2,3,5-trimethylphenol, isopropylphenol (e.g., 4-isopropylphenol), tert-butylphenol (e.g., 4-tert-butylphenol), amylphenol (e.g., 4-tert-amylphenol), heptylphenol (e.g., 4-heptylphenol), octylphenol (e.g., o-octylphenol, p-octylphenol, etc.), nonylphenol (e.g., 4-(2,4-dimethylheptan-3-yl)phenol), decylphenol, dodecylphenol, bisphenols such as diphenylolpropane (bisphenol-A), phenylphenol (e.g., 3-phenylphenol), cumylphenol, mequinol, benzyloxyphenol, guaiacol, ethoxyphenol (e.g., 4-ethoxyphenol), as well as polyhydric phenolic compounds such as resorcinol, pyrogallol, catechol, and p-hydroquinone, including mixtures of two or more of any of the above. Also included are fused ring phenols such as naphthols (e.g., 1-naphthol, 2-naphthol, etc.) and similar compounds.

In preferred embodiments, the terpene phenol resin (A) employed in the inkjet ink is a copolymer formed from phenol and one or more of α-pinene, β-pinene, and limonene.

The terpene phenol resin (A) may be present in the inkjet inks in an amount of at least 0.1 wt. %, preferably at least 0.5 wt. %, preferably at least 1 wt. %, more preferably at least 1.5 wt. %, even more preferably at least 2 wt. %, yet even more preferably at least 2.5 wt. %, and up to 10 wt. %, preferably up to 9 wt. %, preferably up to 8 wt. %, preferably up to 7 wt. %, preferably up to 6 wt. %, more preferably up to 5 wt. %, even more preferably up to 4 wt. %, yet even more preferably up to 3 wt. %, based on a total weight of the inkjet ink.

The molecular weight of the terpene phenol resin (A) may vary depending on the monomers utilized, the reaction conditions, among many other factors, but typically terpene phenol resins (A) are used that have a weight average molecular weight (Mw) of at least 400 g/mol, preferably at least 500 g/mol, more preferably at least 600 g/mol, even more preferably at least 700 g/mol, and up to 3,000 g/mol, preferably up to 2,500 g/mol, more preferably up to 2,000 g/mol, even more preferably up to 1,500 g/mol, yet even more preferably up to 1,000 g/mol.

The terpene phenol resin (A) utilized herein may be categorized based upon its softening point (SP), for example according to a ring-and-ball softening point method. The ring-and-ball softening point is defined as the temperature at which a disk of the sample held within a horizontal ring is forced downward a distance of 1 in. (25.4 mm) under the weight of a steel ball as the sample is heated at a prescribed rate in a glycerol bath (e.g., according to JIS B7410 In some embodiments, the terpene phenol resin (A) has a softening point of at least 60 °C, preferably at least 80 °C, preferably at least 90 °C, preferably at least 100 °C preferably at least 105 °C, more preferably at least 110 °C, even more preferably at least 115 °C, yet even more preferably at least 120 °C, and up to 160 °C, preferably up to 155 °C, preferably up to 150 °C, preferably up to 145 °C, preferably up to 140 °C, more preferably up to 135 °C, even more preferably up to 130 °C, yet even more preferably up to 125 °C.

The hydroxyl value (OHV) is defined as the number of milligrams of potassium hydroxide required to neutralize the acetic acid taken up on acetylation of one gram of a chemical substance that contains free hydroxyl groups. Therefore, the hydroxyl value, or the measure of the relative hydroxyl content of the terpene phenol resin (A), is directly correlated to the content of the phenolic compound(s) within the terpene phenol resin (A), with higher hydroxyl values indicating higher phenolic compound incorporation into the copolymer (and lower terpene incorporation). Hydroxyl values can be determined according to Japanese Industrial Standards JIS K 0070: 1992 "Test methods for acid value, saponification value, ester value, iodine value, hydroxyl value, and unsaponifiable matter of chemical products."

Acceptable decap times are achievable when a terpene phenol resin (A) is employed having a hydroxyl value of at least 10 mgKOH/g, preferably at least 15 mgKOH/g, preferably at least 20 mgKOH/g, preferably at least 22 mgKOH/g, preferably at least 24 mgKOH/g, preferably at least 25 mgKOH/g, preferably at least 28 mgKOH/g, preferably at least 30 mgKOH/g, preferably at least 32 mgKOH/g, preferably at least 34 mgKOH/g, more preferably at least 36 mgKOH/g, even more preferably at least 38 mgKOH/g, yet even more preferably at least 40 mgKOH/g, and up to 80 mgKOH/g, preferably up to 75 mgKOH/g, preferably up to 70 mgKOH/g, preferably up to 65 mgKOH/g, preferably up to 60 mgKOH/g, more preferably up to 55 mgKOH/g, even more preferably up to 50 mgKOH/g, yet even more preferably up to 45 mgKOH/g. In preferred embodiments, the hydroxyl value (OHV) of the terpene phenol resin (A) employed in the disclosed inkjet inks is from 25 to 60 mgKOH/g.

Examples of such terpene phenol resins (A) having a hydroxyl value of 10 to 80 mgKOH/g include, but are not limited to, YS POLYSTER products such as YS POLYSTER U130 (OHV = 25 mgKOH/g; SP = 130 °C), YS POLYSTER U115 (OHV = 30 mgKOH/g; SP = 115 °C), YS POLYSTER T160 (OHV = 60 mgKOH/g; SP = 160 °C), and YS POLYSTER T145 (OHV = 65 mgKOH/g; SP = 145 °C), available from Yasuhara Chemical Co. Ltd., and DERTOPHENE products such as DERTOPHENE T (OHV = 20-50 mgKOH/g; SP = 95 °C; Mw = 700 g/mol), DERTOPHENE T105 (OHV = 40 mgKOH/g; SP = 105 °C; Mw = 700 g/mol), DERTOPHENE T115 (OHV = 50 mgKOH/g; SP = 120 °C; Mw = 700 g/mol), and DERTOPHENE T160 (OHV = 60 mgKOH/g; SP = 160 °C), available from DRT/Pinova. Particularly preferred terpene phenol resins (A) are YS POLYSTER U130 DERTOPHENE T105, DERTOPHENE T115, and DERTOPHENE T160.

As will become clear, it has been unexpectedly discovered that a specific type of terpene phenol resin (A) those having an OHV of 10 to 80 mgKOH/g provide the inkjet inks with desirable decap behavior (*see* e.g., Tables 1-3, Examples 1-4, 9-13, and 16-18). Without being bound by theory, it is believed that the terpene phenol resin (A) improves the decap behavior of the inkjet inks by forming a thin 'skin' or film covering within the printhead nozzles, thereby creating a temporary seal that prevents or reduces solvent losses during periods of inactivity, but where the 'skin' can be easily broken once the printing operation resumes. The above hydroxyl value range, and thus polarity of the terpene phenol resin (A), is believed to be high enough for vehicle solubility, but not so high as to inhibit 'skin' formation from taking place due to too strong an interaction with the solvent system.

On the other hand, it has been found that terpene phenol resins having an OHV outside of the 10 to 80 mgKOH/g range, such as YS POLYSTER G125 (OHV = 135 mgKOH/g; SP = 125 °C) and YS POLYSTER N125 (OHV = 165 mgKOH/g; SP = 125 °C), fail to provide the inkjet inks with acceptable decap properties, with nozzle misfirings occurring in 5 minutes or less after decapping *(see* e.g., Tables 1 and 3, Examples 5 and 6). In such cases where the terpene phenol resin has an OHV above 80 mgKOH/g (high polarity), it is believed that a strong interaction between the terpene phenol resin and the solvent system is responsible for preventing proper 'skin' formation.

In addition to the terpene phenol resin (A), the inkjet inks may optionally contain other tackifiers/binder/adhesive substances in amounts described above for the terpene phenol resin (A). Such additional tackifiers/binder/adhesive substances may include, but are not limited to,
- phenol resins (i.e. copolymers of phenolic compounds with formaldehyde), for example novolak resins such as PHENOLITE TD-2131 and PHENOLITE TD-2090 available from DIC Corp.;
- terpene resins (i.e. homopolymers or copolymers made solely from terpene monomers), such as those made from polymerization of monocyclic monoterpenes (e.g., limonene) and/or bicyclic monoterpenes (e.g., α-pinene, β-pinene), for example YS RESIN PX1250, YS RESIN PX1150, YS RESIN PX1000, YS RESIN PX800, YS RESIN PX1150N, and YS RESIN PX300N, available from Yasuhara Chemical Co. Ltd. and PICCOLYTE A115, PICCOLYTE A125, PICCOLYTE A135, PICCOLYTE A135 PLUS, and PINOVA RESIN 2495, each available from Pinova ;
- rosin resins, including, but not limited to: rosin ester resins, such as e.g., an ester of a rosin composed mainly of an abietic type or pimaric type resin acid that has been reacted with an alcohol(s) such as glycerin, pentaerythritol, ethylene glycol, diethylene glycol, triethylene glycol, methanol, etc., and optionally hydrogenated or partially hydrogenated, with specific mention being made to HARIESTER products available from Harima Chemicals, Inc., STAYBELITE ESTER 10-E and PERMALYN 6110, each available from Eastman, SUPER ESTER A-125, SUPER ESTER A-75, PENSEL D-125, PINECRYSTAL KE-359 available from Arakawa Chemical Industries, Ltd., and FORAL 85, FORAL 105, HERCOLYN products, PEXALYN products, and PENTALYN products available from Pinova; hydrogenated acidic rosins such as FORAL AX and FORAL DX, each available from Pinova; partially hydrogenated acidic rosins such as STAYBELITE RESIN-E, available from Eastman, and STAYBELITE and STAYBELITE A, each available from PINOVA; dimerized rosins such as POLY-PALE partially dimerized rosin available from Eastman; and functionalized rosin resins, for example an ester (e.g., glycerol ester) of a rosin which has been modified with maleic anhydride or a rosin which has been subject to carboxylic acid reduction conditions, with specific mention being made to LEWISOL 28-M and Abitol-E hydroabietyl alcohol, each available from Eastman;
- polyamide resins, for example VERSAMID 725, 744, 756, 759 available from BASF Japan Ltd., TOHMIDE 90, 92, 394-N available from Sanho Chemical Co. Ltd., and SUNMIDE 550, 554, 615A, 638, 640 available from Evonik;
- epoxy resins including sulfonamide-modified epoxy resins for example AD-PRO MTS available from Rit-Chem;
- (meth)acrylate and styrene/(meth)acrylate resins (acrylic resins) for example JONCRYL 63, JONCRYL 67, JONCRYL 586, JONCRYL 611, JONCRYL 682, JONCRYL 693, available from BASF, PARALOID DM-55 and PARALOID B-66, available from Palmer Holland, PARALOID B-72, available from Dow Chemical, USA, and ELVACITE 2013, available from Lucite Inc.;
- polyurethane resins, such as those formed from reaction between (i) polyols including, but not limited to, ethylene glycol, propylene glycol, propanediol, butanediol, polyethylene glycol, polypropylene glycol, polytetrahydrofuran diol, 3-methyl-1,5-pentanediol, 1,9-nonanediol, polyester polyols such as polyethylene glycol adipate diol, polyethylene glycol succinate diol, poly(3-methyl-1,5-pentanediol adipate) glycol, poly(3-methyl-1,5-pentanediol terephthalate) glycol, carbonate polyols, and (ii) diisocyanates including, but not limited to, 2,4-toluene diisocyanate, 2,6-toluene diisocyanate, 4,4-diphenylmethane diisocyanate, hexamethylene diisocyanate, and isophorone diisocyanate; for example PERMAX 200, PERMAX 202, and SANCURE 20025F, available from Lubrizol;
- polyvinyl butyral resins, for example PIOLOFORM BN 16 and MOWITAL B20H available from Kuraray America, Inc.;
- polyhydroxystyrene resins such as poly(p-hydroxy styrene) from DuPont;
- vinyl resins, for example UCAR VYHH, VMCH, VMCA, and VAGF, available from Dow Chemical Company, and VINNOL E15/-45, H14/36. E15/45M, and E16/40A, available from Wacker Chemie AG, Germany;
- sulfonamide modified formaldehyde resins such as p-toluene sulfonamide formaldehyde resin;
- cellulose ester resins such as cellulose acetate butyrate (CAB-551-0.01) available from Eastman;
- as well as polyesters, sulfonated polyesters, cellulose ethers, cellulose nitrate resins, polymaleic anhydrides, acetal polymers, styrene/butadiene copolymers, melamine formaldehyde resins, sulfonamide-modified melamine formaldehyde resins, ketone-aldehyde resins, and polyketone resins;
- and the like, including mixtures thereof.

In some embodiments, the inkjet inks are substantially free of other tackifiers/binder/adhesive (i.e., those other than the terpene phenol resin (A)). In some embodiments, the inkjet inks are substantially free of polyamide resins, such as those described above and disclosed in US2017/0037269. In preferred embodiments, the terpene phenol resin (A) having an OHV of 10 to 80 mgKOH/g is the only tackifier/binder/adhesive resin present in the inkjet inks.

### Solvent System

In many printing processes that utilize solvent-based inks, and particularly in thermal inkjet printing, the selection of an appropriate solvent system may impact the reliability of the printing process, the properties/appearance of the printed ink product, and the overall printing process efficiency. For example in thermal inkjet printing, the choice of solvent system may 1) aid bubble formation during the jetting process resulting in reliable ink jetting, 2) affect the stability/volatility of the inkjet inks by changing the interaction dynamics between the solvent(s) and the various inkjet ink components and thus the decap behavior, kogation, and/or drop trajectory, 3) impact the adhesion, rub and scratch resistance, and optical density properties of the printed image through the interactive forces between the solvent system and the other inkjet ink components even though the solvent(s) may no longer be present, or may be present in lesser amounts, after drying, and/or 4) influence the drying time after application or the equipment needed to dry the applied ink.

In light of the above, the solvent system of the disclosed inkjet inks includes one or more (B) carbonate esters (i.e., carbonic acid diesters). In particular, suitable drying times can be achieved when the carbonate ester (B) has a boiling point (at 760 mmHg) of less than 150 °C, preferably less than 145 °C, preferably less than 140 °C, preferably less than 135 °C, preferably less than 130 °C, preferably less than 125 °C, preferably less than 120 °C, preferably less than 115 °C, preferably less than 110 °C, more preferably less than 105 °C, even more preferably less than 100 °C, yet even more preferably less than 95 °C, with particular preference given to carbonate esters (B) having a boiling point of 90 °C to 126 °C, more preferably 90 °C to 107 °C.

Any carbonate ester (B) satisfying the above boiling point range condition can be used in the inkjet inks herein, including acyclic carbonate esters containing alkyl groups, alkenyl groups, substituted variants (e.g., halogen substituted variants ) thereof, and mixtures thereof, either symmetrical or unsymmetrical, such as those containing a total of 3 to 6 carbon atoms, or 4 to 5 carbon atoms. For example, the carbonate ester (B) may be of general formula (I) 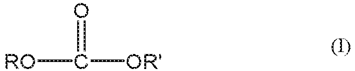 wherein R and R' are independently an alkyl group, an alkenyl group, or a substituted variant thereof (e.g., halogen substituted alkyl or alkenyl group), and where R and R' can be the same or different, so long as the carbonate ester meets the boiling point limitation above.

Examples of carbonate esters (B) which provide satisfactory drying times include, but are not limited to, dimethyl carbonate, ethyl methyl carbonate, diethyl carbonate, methyl propyl carbonate, methyl isopropyl carbonate, bis(2,2,2-trifluoroethyl) carbonate, allyl methyl carbonate, and allyl ethyl carbonate, with particular preference given to dimethyl carbonate, ethyl methyl carbonate, and diethyl carbonate, more preferably dimethyl carbonate.

To achieve the desired drying times, the carbonate ester (B) may be present in the inkjet inks in an amount of at least 5 wt. %, preferably at least 6 wt. %, preferably at least 8 wt. %, preferably at least 10 wt. %, preferably at least 12 wt. %, more preferably at least 14 wt. %, even more preferably at least 16 wt. %, yet even more preferably at least 18 wt. %, and up to 50 wt. %, preferably up to 45 wt. %, preferably up to 40 wt. %, preferably up to 35 wt. %, more preferably up to 30 wt. %, even more preferably up to 25 wt. %, yet even more preferably up to 20 wt. %, based on a total weight of the inkjet inks. In some embodiments, a weight ratio of the carbonate ester (B) to the terpene phenol resin (A) ((B):(A)) is at least 2:1, preferably at least 4:1, preferably at least 5:1, preferably at least 6:1, more preferably at least 7:1, even more preferably at least 8:1, yet even more preferably at least 9:1, and up to 25:1, preferably up to 24:1, preferably up to 22:1, preferably up to 20:1, preferably up to 18:1, preferably up to 16:1, more preferably up to 14:1, even more preferably up to 12:1 , yet even more preferably up to 10:1.

When a carbonate ester (B) having a sufficiently low boiling point (e.g., less than 150 °C) is included in the inkjet inks in an appropriate amount, inkjet inks can be produced with extremely fast drying times of 15 seconds or less, preferably 10 seconds or less, preferably 5 seconds or less (*see* e.g., Tables 1-3, Examples 1-4, 9-14, and 16-18). Without wishing to be bound by theory, it is believed that carbonate esters (B) provide the inkjet inks with a low boiling solvent that does not interact strongly with the phenolic groups of the terpene phenol resin (A), owing to the fact that carbonate esters lack hydroxyl functionality, which facilitates rapid solvent losses after the inkjet ink is applied.

When carbonate esters are used which have a boiling point of 150 °C or higher, the rate of solvent loss is too slow and the inkjet inks suffer from unacceptable drying times (*see* e.g., Tables 2-3, Example 15). Thus, it is preferred that the inkjet inks of the present disclosure are substantially free of, preferably completely free of (0 wt.%), carbonate esters having a boiling point of 150 °C or higher, preferably 160 °C or higher, preferably 170 °C or higher, more preferably 180 °C or higher, even more preferably 190 °C or higher, yet even more preferably 200 °C or higher. Examples of such high boiling carbonate esters include, but are not limited to, dipropyl carbonate, dibutyl carbonate, alkylene carbonates (e.g., ethylene carbonate, propylene carbonate, 4-(hydroxymethyl)-1,3-dioxolan-2-one, 4-chloro-1,3-dioxolan-2-one, 4-fluoro-1,3-dioxolan-2-one, etc.), dibenzyl carbonate, benzyl phenyl carbonate, 1-chloroethyl ethyl carbonate, 1-chloroethyl cyclohexyl carbonate, vinylene carbonate, bis(4-methoxyphenyl) carbonate, bis(2-chloroethyl) carbonate, and dimethylallyl carbonate.

Further, where the carbonate ester (B) having a boiling point of less than 150 °C is replaced with a lower alcohol other than ethanol, even a lower alcohol having a comparable or lower boiling point (e.g., 1-propanol), the resulting inkjet inks have been unexpectedly found to suffer from unacceptable drying times (*see* e.g., Tables 1 and 3, Example 7). This effect cannot be the result of boiling point alone. Instead, it is believed that the interaction between the hydroxyl functionality of the lower alcohol with the phenolic groups of the terpene phenol resin (A) is too strong, and that this strong interaction prevents rapid drying of the inkjet ink after application, irrespective of the boiling point of the lower alcohol.

In addition to the carbonate ester (B), the inkjet inks may also be formulated with (C) ethanol, which when present, is preferably used as the base solvent. In some embodiments, ethanol (C) is present in the inkjet inks in an amount of at least 40 wt. %, preferably at least 45 wt. %, preferably at least 50 wt. %, more preferably at least 55 wt. %, even more preferably at least 60 wt. %, yet even more preferably at least 65 wt. %, and up to 85 wt. %, preferably up to 80 wt. %, more preferably up to 75 wt. %, even more preferably up to 72 wt. %, yet even more preferably up to 70 wt. %, based on a total weight of the inkjet inks.

The inclusion of ethanol (C) may aid solvation of the inkjet ink components and provide the inkjet inks with acceptable volatility for the purposes of dry times. Thus, when taken together, a blend of carbonate ester (B) and ethanol (C) may incorporate advantageous characteristics from both carbonate ester (B) and ethanol (C) to augment the fast dry time properties of the inkjet inks. A combined weight of carbonate ester (B) and ethanol (C) ((B)+(C)) in the inkjet ink may range from at least 60 wt. %, preferably at least 65 wt. %, preferably at least 70 wt. %, preferably at least 75 wt. %, more preferably at least 80 wt. %, even more preferably at least 85 wt. %, yet even more preferably at least 88 wt. %, and up to 95 wt. %, preferably up to 93 wt. %, more preferably up to 91 wt. %, even more preferably up to 90 wt. %, yet even more preferably up to 89 wt. %, based on a total weight of the inkjet ink.

In some embodiments, the amount of carbonate ester (B) is equal to or greater than the amount of ethanol (C) by weight. For example, a weight ratio of the carbonate ester (B) to ethanol (C) ((B)/(C)) may range from 1:1 and up to 2:1, preferably up to 1.5:1, preferably up to 1.3:1, preferably up to 1.2:1, preferably up to 1.1:1. However, it is preferred that ethanol (C) constitutes a majority of the solvent system used in the inkjet inks herein, i.e., the amount of carbonate ester (B) is preferably less than the amount of ethanol (C) by weight. For example, a preferred weight ratio of the carbonate ester (B) to ethanol (C) ((B)/(C)) may range from at least 0.05:1, preferably at least 0.08:1, preferably at least 0.1:1, preferably at least 0.125:1, more preferably at least 0.15:1, even more preferably at least 0.2:1, yet even more preferably at least 0.25:1, and up to 0.80:1, preferably up to 0.70:1, preferably up to 0.65:1, preferably up to 0.60:1, more preferably up to 0.50:1, even more preferably up to 0.40:1, yet even more preferably up to 0.30:1.

In addition to the carbonate ester (B) whose boiling point is less than 150 °C and ethanol (C), the inkjet inks may optionally contain one or more additional organic solvents or humectants (such as those described in US2017/0037269, US2018/0251650, and GB2507727A When present, the additional organic solvents (or humectants) may be included in amounts of up to 35 wt. %, preferably up to 30 wt. %, preferably up to 25 wt. %, preferably up to 20 wt. %, preferably up to 15 wt. %, preferably up to 10 wt. %, preferably up to 5 wt. %, more preferably up to 4 wt. %, even more preferably up to 2 wt. %, yet even more preferably up to 1 wt. %. Examples of such additional organic solvents or humectants include, but are not limited to:
- lower alcohols containing from 1 to 8 carbon atoms (other than ethanol) such as methanol, 1-propanol, 1-butanol, 2-butanol, and 2-propanol;
- glycol ethers such as ethylene glycol monomethyl ether, ethylene glycol monoethyl ether, ethylene glycol monobutyl ether, diethylene glycol monomethyl ether, diethylene glycol monoethyl ether, diethylene glycol mono-n-propyl ether, ethylene glycol mono-isopropyl ether, diethylene glycol mono-iso-propyl ether, ethylene glycol mono-n-butyl ether, ethylene glycol niono-t-butyl ether, diethylene glycol mono-n-butyl ether, triethylene glycol mono-n-butyl ether, diethylene glycol mono-t-butyl ether, propylene glycol monomethyl ether, propylene glycol monoethyl ether, propylene glycol mono-t-butyl ether, propylene glycol mono-n-propyl ether, propylene glycol mono-isopropyl ether, propylene glycol mono-n-butyl ether, dipropylene glycol mono-n-butyl ether, dipropylene glycol monomethyl ether, dipropylene glycol monoethyl ether, dipropylene glycol mono-n-propyl ether, and dipropylene glycol mono-iso-propyl ether;

- ethers (non-glycol ethers), for example ethers containing 4 to 8 carbon atoms such as diethyl ether, dipropyl ether, methyl tert-butyl ether, dibutyl ether, dioxane, and tetrahydrofuran;
- ketones, for example ketones containing 3 to 6 carbon atoms, including acetone, methyl ethyl ketone, 3-pentanone, cyclohexanone, and diacetone alcohol;
- esters, including those having 3 to 8 carbon atoms, for example methyl acetate, ethyl acetate, n-butyl acetate, methyl lactate, ethyl lactate, butyl lactate, methoxyethyl acetate, ethoxyethyl acetate, methoxypropyl acetate, ethoxypropyl acetate;
- and the like, as well as mixtures of two or more thereof.

In preferred embodiments, ethanol (C) is the only lower alcohol present in the inkjet inks, that is, the inkjet inks are substantially free of all lower alcohols having 1 to 8 carbon atoms other than ethanol (C). In particular, the inkjet inks are preferably substantially free of 1-propanol, 2-propanol, and 1-butanol. In some embodiments, the inkjet inks are substantially free of ketone solvents, in particular, the inkjet inks are preferably substantially free of methyl ethyl ketone and acetone. In some embodiments, the inkjet inks are substantially free of additional organic solvents and humectants, that is, organic solvents and humectants other than carbonate ester (B) and ethanol (C). In preferred embodiments, the inkjet inks are substantially free of glycol ethers.

In preferred embodiments, the inkjet inks of the present disclosure are substantially non-aqueous, meaning that no water is added to the inkjet inks other than what may be incidental amounts of moisture derived from ambient conditions. In such cases, the inkjet inks may have less than 1 wt. %, preferably less than 0.5 wt. %, preferably less than 0.1 wt. %, preferably less than 0.05 wt. %, preferably less than 0.01 wt. % of water, more preferably 0 wt. %, based on the total weight of inkjet inks.

### (D) Alkanolamine

The inkjet inks may optionally include a neutralization reagent, preferably in the form of an alkanolamine, which are alkane-based compounds that contain both hydroxyl (-OH) and amino (primary, secondary, or tertiary) groups.

In some embodiments, the alkanolamine (D) has a total of at least 2 carbon atoms, preferably at least 3 carbon atoms, preferably at least 4 carbon atoms, and up to 8 carbon atoms, preferably up to 7 carbon atoms, more preferably up to 6 carbon atoms, more preferably up to 5 carbon atoms.

In preferred embodiments, the alkanolamine (D) used in the inkjet inks herein has the following general formula (II): 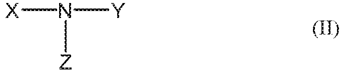 wherein X, Y and Z are independently selected from the group consisting of
- hydrogen;
- a C₁-C₅ alkyl group, preferably a C₂-C₃ alkyl group; and
- an alkanol group, preferably a C₂-C₅ alkanol group, more preferably a C₃-C₄ alkanol group;
- wherein at least one of X, Y and Z is an alkanol group (an alkyl substituent that bears at least one hydroxyl group).

In some embodiments, one of X, Y, and Z is an alkanol group. In some embodiments, two of X, Y, and Z are an alkanol group. In some embodiments, X, Y, and Z are all alkanol groups.

With respect to the one or more alkanol groups, the alkyl chain thereof may contain branching. Alternatively, the alkyl chain of the alkanol group may be linear (contains no alkyl branching). In preferred embodiments, the alkanol group(s) is based on a linear alkyl chain. Further, the hydroxyl bearing carbon of the alkanol group may be a primary, secondary, or tertiary carbon, preferably the hydroxyl bearing carbon is a primary or secondary carbon.

The alkanolamine (D) may contain a primary amino group (i.e., two of X, Y, and Z are hydrogen), a secondary amino group (i.e., one of X, Y, and Z are hydrogen), or a tertiary amino group (i.e., X, Y, and Z are all non-hydrogen). When an alkanolamine (D) is employed that contains a secondary amino group, the two non-hydrogen substituents may be the same or different alkanol groups, preferably the same alkanol group, for example as is the case in diethanolamine. When an alkanolamine (D) is employed that contains a tertiary amino group, the three non-hydrogen substituents may be the same or different alkanol groups, preferably the same alkanol group, for example as is the case in triethanolamine.

Suitable examples of the alkanolamine (D) include, but are not limited to, ethanolamine, N-methylethanolamine, N,N-dimethylethanolamine, N-ethylethanolamine, N-propylethanolamine, N-isopropylethanolamine, N,N-diisopropylethanolamine, N-butylethanolamine, diethanolamine, N-methyldiethanolamine, N-ethyldiethanolamine, triethanolamine, propanolamine (3-Amino-1-propanol), N-methylpropanolamine, N,N-dimethylpropanolamine, dipropanolamine, tripropanolamine, isopropanolamine, N,N-dimethylisopropanolamine, diisopropanolamine, triisopropanolamine, 2-amino-2-methyl-1-propanol, 2-amino-2-ethyl-1,3-propanediol, 4-amino-1-butanol, 2-amino-1-butanol, sec-butanolamine, and di-sec-butanolamine. In preferred embodiments, the alkanolamine (D) is at least one selected from the group consisting of ethanolamine, diethanolamine, triethanolamine, propanolamine (3-amino-1-propanol), and isopropanolamine, with isopropanolamine being more preferred.

In some embodiments, the alkanolamine (D) is present in the inkjet inks in amounts of at least 0.1 wt. %, preferably at least 0.2 wt. %, preferably at least 0.3 wt. %, preferably at least 0.4 wt. %, preferably at least 0.5 wt. %, preferably at least 0.6 wt. %, preferably at least 0.7 wt. %, more preferably at least 0.8 wt. %, even more preferably at least 0.9 wt. %, yet even more preferably at least 1 wt. %, and up to 10 wt. %, preferably up to 8 wt. %, preferably up to 6 wt. %, preferably up to 5 wt. %, preferably up to 4 wt. %, more preferably up to 3 wt. %, even more preferably up to 2 wt. %, yet even more preferably up to 1.5 wt. %, relative to the total weight of the inkjet inks. In some embodiments, the weight ratio of the terpene phenol resin (A) to the alkanolamine (D) ((A):(D)) is at least 0.5:1, preferably at least 0.7:1, more preferably at least 1:1, even more preferably at least 1.5:1, yet even more preferably at least 2:1, and up to 15:1, preferably up to 10:1, preferably up to 8:1, more preferably up to 6:1, even more preferably up to 4:1, yet even more preferably up to 3:1.

### (E) Silicone acrylate copolymer

The inkjet ink may optionally include (E) a silicone acrylate copolymer as a surfactant. The incorporation of such a surfactant may provide the inkjet inks advantageous nozzle discharge properties, as well as leveling and substrate wetting properties, thus contributing to improved overall print quality. By use of a copolymer made of distinct materials, such as (meth)acrylate and silicone portions, a single ingredient can supply multiple beneficial characteristics to the inkjet inks. For example, the (meth)acrylate portion may provide advantageous leveling and substrate wetting, while the silicone portion may provide desirable anti-crater properties.

The silicone acrylate copolymer (E) may be obtained according to methods known to those of ordinary skill in the art, for example, by polymerization (e.g., free-radical polymerization) or grafting of a polyorganosiloxane macromer comprising at least one polymerizable group (e.g., on one of the ends of the polyorganosiloxane chain, on both ends of the polyorganosiloxane chain, or on the silicone backbone) and a (meth)acrylate monomer, as described for example, in US 5,219,560. Preferably, the silicone acrylate copolymer (E) is a polysiloxane (polyorganosiloxane) modified poly(meth)acrylate, that is, a copolymer composed of a poly(meth)acrylate backbone and one or more polyorganosiloxane side chains grafted to the poly(meth)acrylate backbone (i.e., a graft copolymer). In preferred embodiments, a major proportion of the silicone acrylate copolymer (E) is poly(meth)acrylate. In preferred embodiments, the silicone acrylate copolymer (E) has a polyorganosiloxane content of at least 1 wt. %, preferably at least 2 wt. %, more preferably at least 3 wt. %, even more preferably at least 4 wt. %, and up to 20 wt. %, preferably up to 15 wt. %, more preferably up to 10 wt. %, even more preferably up to 8 wt. %, based on a total weight of the silicone acrylate copolymer (E).

The polyorganosiloxane macromer may be based on any organosilicon polymer or oligomer of linear structure, of variable molecular weight, which can be formed from polymerization and/or polycondensation of suitably functionalized silanes, and which has a polysiloxane backbone structure (silicon atoms are linked together via oxygen atoms, -Si-O-Si-), with alkyl, aryl, and/or arylalkyl groups directly bonded to the (tetravalent) silicon atoms. For example, the polyorganosiloxane backbone may be a polydimethylsiloxane backbone (where each silicon atom in the backbone is directly bonded to two methyl groups), a poly(dimethylsiloxane-co-methylphenylsiloxane) backbone, a poly(dimethylsiloxane-co-diphenylsiloxane) backbone, or a poly(dimethylsiloxane-co-methylalkylsiloxane) backbone.

The polyorganosiloxane macromer may be modified to include at least one polymerizable group (e.g., (meth)acrylate-containing group), preferably the polyorganosiloxane macromer may be end group modified to include a polymerizable group on at least one of the ends of the polysiloxane chain. In some embodiments, the polyorganosiloxane macromer has a polymerizable group on both ends of the polysiloxane chain. In some embodiments, the polyorganosiloxane macromer has a polymerizable group on one end of the polysiloxane chain and a non-polymerizable end group (e.g., trimethyl silane, triphenyl silane, phenyldimethylsilane, etc.) on the other end of the chain. In some embodiments, the polymerizable group may be a styrenyl-type group (CH₂=C(R₁)-arylene-) or a (meth)acrylate group, in particular a group represented by CH₂=CR₁-COO-R₂-, wherein R₁ is a hydrogen or a methyl group and R₂ is a divalent, linear or branched hydrocarbon group having 1 to 10 carbon atoms, preferably 2 to 8 carbon atoms, preferably 3 to 6 carbon atoms, and optionally containing ether bonds therein (e.g., one, two, three, four, etc. ether bonds), and optionally containing hydroxyl group substituent(s) (e.g., as in the case of ring-opened products resulting from reaction between an epoxide and (meth)acrylic acid). In preferred embodiments, R₂ is -(CH₂)n- with n = 1 to 10, -CH₂CH(CH₃)CH₂-, - CH₂CH₂OCH₂CH₂-, -CH₂CH₂OCH₂CH₂CH(CH₃)CH₂-, -CH₂CH₂OCH₂CH₂OCH₂CH₂CH₂-, and - CH₂CH(OH)CH₂OCH₂CH₂CH₂-.

The silicone acrylate copolymer (E) may be made by polymerizing the polyorganosiloxane macromer in the presence of a wide variety of (meth)acrylate monomers, including both (meth)acrylic acid (acrylic acid and methacrylic acid) and ester variants, which may be aryl or alkyl (meth)acrylate esters. The poly(meth)acrylate backbone may be formed from one type of monomer, or alternatively from two or more types of (meth)acrylate monomers. In preferred embodiments, the (meth)acrylate monomers are (meth)acrylate alkyl esters, which may be chosen from linear, branched or cyclic alkyl esters, for example C₁ to C₂₂ alkyl esters, preferably C₂ to C₂₀ alkyl esters, preferably C₃ to C₁₈ alkyl esters of acrylates and methacrylates. In some embodiments, the alkyl group is chosen from methyl, ethyl, butyl, stearyl, isostearyl, and 2-ethylhexyl, as well as mixtures thereof. Suitable (meth)acrylate monomers include, but are not limited to, methyl acrylate, ethyl acrylate, isopropyl acrylate, n-butyl acrylate, tert-butyl acrylate, cyclohexyl acrylate, 2-ethylhexyl acrylate, tridecyl acrylate, stearyl acrylate, isostearyl acrylate, behenyl acrylate, methyl methacrylate, ethyl methacrylate, isopropyl methacrylate, n-butyl methacrylate, tert-butyl methacrylate, cyclohexyl methacrylate, 2-ethylhexyl methacrylate, tridecyl methacrylate, stearyl methacrylate, isostearyl methacrylate, behenyl methacrylate, and combinations thereof.

In some embodiments, the silicone acrylate copolymer (E) has a weight average molecular weight of from 3,000 g/mol, preferably from 4,000 g/mol, more preferably from 5,000 g/mol, even more preferably from 8,000 g/mol, yet even more preferably from 10,000 g/mol, and up to 500,000 g/mol, preferably up to 400,000 g/mol, more preferably up to 300,000 g/mol, even more preferably up to 200,000 g/mol, yet even more preferably up to 100,000 g/mol.

When employed in the inkjet inks, the silicone acrylate copolymer (E) may be used as is or, alternatively, may be dispersed or dissolved in an organic solvent such as lower alcohols containing from 2 to 8 carbon atoms (e.g., ethanol, 1-proponol, 2-propanol, 1-butanol, etc.), ester solvents (e.g., methoxyethyl acetate, ethoxyethyl acetate, methoxypropyl acetate, ethoxypropyl acetate, butyl acetate, etc.) or oils (e.g., cyclopentasiloxane). In some embodiments, when employed as a dispersion or solution, the solvent is an ester solvent, most preferably methoxypropyl acetate. In some embodiments, the solids (silicone acrylate copolymer (E)) content of the dispersion or solution is at least 30 wt. %, preferably at least 40 wt. %, preferably at least 50 wt. %, and up to 60 wt. %, preferably up to 55 wt. %, preferably up to 52 wt. %, relative to a total weight of the dispersion/solution.

Representative examples of silicone acrylate copolymers (E) that are commercially available and which may be used in the inkjet inks described herein include, but are not limited to, KP-541, KP-543, KP-545, KP-550, KP-575 (acrylic polymers grafted with polydimethylsiloxane side chains, available from Shin-Etsu Chemical Co., Ltd.), BYK-3550 (available from BYK Japan K.K.), including mixtures thereof. In preferred embodiments, the silicone acrylate copolymer (E) is BYK-3550.

The silicone acrylate copolymer (E) may be employed in amounts of at least 0.01 wt. %, preferably at least 0.05 wt. %, more preferably at least 0.1 wt. %, even more preferably at least 0.5 wt. %, yet even more preferably at least 1 wt. %, and up to 5 wt. %, preferably up to 4 wt. %, more preferably up to 3 wt. %, even more preferably up to 2.5 wt. %, yet even more preferably up to 2 wt. %, preferably up to 1.5 wt. %, based on a total weight of the inkjet ink.

### (F) Colorant

It is to be readily appreciated by those of ordinary skill in the art that one or more colorants (F) may be optionally included in the inkjet inks to provide colored inks that may be used for a variety of printing purposes and the inkjet inks are not limited to any particular color. Any colorant (F) can be employed in the inkjet inks to provide the desired color, including dyes, pigments, mixtures thereof, and the like, provided that the colorant (F) can be dissolved or dispersed within the inkjet inks. Suitable colors include, for example, cyan, magenta, yellow, and key (black) ("CMYK"), white, orange, green, light cyan, light magenta, violet, and the like, including both spot colors and process colors. In general, the colorant(s) (F) may be employed in amounts of at least 0.1 wt. %, preferably at least 0.5 wt. %, preferably at least 1 wt. %, preferably at least 2 wt. %, more preferably at least 3 wt. %, even more preferably at least 5 wt. %, yet even more preferably at least 6 wt. %, and up to 20 wt. %, preferably up to 15 wt. %, more preferably up to 10 wt. %, even more preferably up to 8 wt. %, yet even more preferably up to 7 wt. (% relative to the total weight of the inkjet inks.

### Dye

The inkjet inks can be formulated with various dyes, with particular preference given to metal complex dyes and organic dyes, specific and non-limiting examples of which include those dyes in the VALIFAST color series such as VALIFAST BLACK 3870, VALIFAST RED 1355, and VALIFAST YELLOW 3150 (which are azo-metal complex dyes), as well as those organic dyes in the OIL color series such as OIL BLUE 613, each available from Orient Chemical Industries Co., Ltd.

### Pigment

The inkjet inks can be formulated with various inorganic pigments and/or organic pigments. In addition to providing color to the inkjet inks, such pigments may be capable of improving the light resistance, the weather resistance, etc., of the printed images.

### (G) Additives

In addition to the components already mentioned, the inkjet inks may also be formulated with various additives (G) to improve various ink characteristics and performance. For example, the inkjet inks may optionally contain one or more of an anti-kogation agent, additional surfactants (i.e., surfactants other than the silicon acrylate copolymer (E)), a stabilizer, and a security taggant, in art appropriate levels.

In particular, the inkjet inks may optionally contain one or more additional surfactants, in addition to or in lieu of the silicon acrylate copolymer (E). Such additional surfactants may be employed in amounts of at least 0.01 wt. %, preferably at least 0.05 wt. %, more preferably at least 0.1 wt. %, even more preferably at least 0.5 wt. %, yet even more preferably at least 1 wt. %, and up to 5 wt. %, preferably up to 4 wt. %, more preferably up to 3 wt. %, even more preferably up to 2.5 wt. %, yet even more preferably up to 2 wt. %, preferably up to 1.5 wt. %, based on a total weight of the inkjet ink. Such additional surfactants may include, but are not limited to
- cationic surfactants, including but not limited to: protonated fatty amines such as protonated salts of C₆-C₂₂ alkyl monoamines, C₆-C₂₂ alkyl (poly)alkylene polyamines, and alkoxylated fatty amines; protonated fatty alkyl amidoamines such as protonated forms of stearamidopropyldimethylamine, stearamidopropyldiethylamine, and palmitamidoethyldimethylamine; and quaternary ammonium compounds such as those formed from alkylation of a tertiary fatty amine, an alkoxylated (tertiary) amine, or an aprotic nitrogenous heteroarene (optionally substituted) having at least one aromatic nitrogen atom with a reactive lone pair of electrons, with specific mention being made to a tri-fatty alkyl ammonium compounds (e.g., trioctyl methyl ammonium chloride), fatty trimethyl ammonium compounds, difatty dimethyl ammonium compounds, fatty- benzyl dimethyl ammonium compounds, and N-fatty alkyl pyridinium or a quinolinium compounds;
- anionic surfactants including, but not limited to: sulfates, such as alkyl sulfates, alkylester-sulfates, alkyl ether sulfates, alkyl-alkoxy-ester-sulfate, sulfated alkanolamides, and glyceride sulfates; sulfonates such as alkyl sulfonates, fatty alkyl-benzene sulfonates, lower alkyl-benzene sulfonates, alpha olefin sulfonates, and lignosulfonates; phosphates such as alkyl aryl ether phosphates, alkyl ether phosphates, and phosphates of fatty alcohols or polyoxyalkylene ethers of fatty alcohols;
- non-ionic surfactants including, but not limited to: amides or monoalkanolamides of fatty acids, including alkoxylated monoalkanolamides of fatty acids such as coconut fatty acid monoethanolamide and coconut fatty acid monoethanolamide reacted with 2-20 moles of ethylene oxide; fatty esters such as ethoxylated and/or propoxylated fatty acids (e.g., castor oil with 2 to 40 moles of ethylene oxide), alkoxylated glycerides (e.g., PEG-24 glyceryl monostearate), glycol esters and derivatives, monoglycerides, polyglyceryl esters, esters of polyalcohols, and sorbitan/sorbitol esters like sorbitan monolaurate (e.g., EMASOL L-10V, available from Kao); ethers, such as alkoxylated C₁-C₂₂ alcohols including alkoxylated fatty alcohols (e.g., ethoxylated cetyl stearyl alcohol, ethoxylated lauryl alcohol), alkoxylated polysiloxanes, ethylene oxide/propylene oxide copolymers, alkoxylated alkylphenols, and alkyl polyglycosides (APGs) such as those made from reaction between fatty alcohols and glucose; polysiloxanes including organomodified silicones (e.g., alkyl, aryl, and/or arylalkyl modified silicones) such as SILTECH C-32, available from Siltech Corporation, COATOSIL 1211C and 3573, each available from Momentive, KF-410 (an arylalkyl-modified polydimethylsiloxane), available from Shin-Etsu Chemical Co., and BYK-322 and BYK-323 (arylalkyl-modified poly(dimethylsiloxane-co-methylalkylsiloxane)), each available from BYK Additives & Instruments; alkyl modified polyoxyalkyleneamines; alkyl modified propoxylated diamines; and alkyl ether amines; photo-cross-linkable silicone acrylates or silicone polyether acrylates such as TEGO RAD 2100, TEGO RAD 2200, TEGO RAD 2250, TEGO RAD 2300 (silicone polyether acrylate), each available from Evonik Industries, and BYK-UV 3500 and 3530, available from BYK; polyacrylates including polyacrylate copolymers and cross-polymers such as BYK-381 and BYK-361N (polyacrylate copolymer), each available from BYK, PEMULEN EZ-4U (acrylate/C10-C30 alkyl acrylate crosspolymer) and PEMULEN TR-2 (acrylic acid/C10-C30 alkyl acrylate crosspolymer), each available from Lubrizol; fluoropolymers such as FC-4430 and FC-4432, available from 3M Corporation: and
- amphoteric surfactants including, but not limited to: fatty alkyl betaines such as lauryl betaine (e.g., AMPHITOL 24B, available from Kao); fatty alkyl amido betaines such as fatty amidopropyl dimethylamino betaine; fatty alkyl sultaines such as fatty dimethyl hydroxysultaine; fatty alkyl amido sultaines such as fatty amido propyl dimethylamino hydroxysultaine; amine oxides, such as N-cocoamidopropyl dimethyl amine oxide, dimethyl fatty alkyl amine oxides such as dimethyl coco amine oxide, lauryldimethyl amine oxide (e.g., AMPHITOL 20N, available from Kao); and imidazole-based amphoteric surfactants (e.g., ELEC AC, available from Kao).

In preferred embodiments, the inkjet inks are substantially free of surfactants other than the silicon acrylate copolymer (E).

### Methods of Making

Embodiments of the inkjet inks described herein may be prepared by any suitable technique known to those of ordinary skill in the art, for example by combining components (A) a terpene phenol resin and (B) a carbonate ester with any other desired organic solvents (e.g., (C) ethanol) and any desired optional ingredients (e.g., (D) an alkanolamine, (E) a silicone acrylate copolymer, (F) a colorant, and/or (G) an additive), in any order and stirring, agitating, and/or homogenizing at a temperature between 20 and 100°C until a homogeneous solution is formed.

In one example, the inkjet ink may be made by first combining the terpene phenol resin (A) with the carbonate ester (B) and any optional additional organic solvents or humectants in a vessel and stirring for example for at least 10 minutes, preferably at least 15 minutes, preferably at least 20 minutes, preferably at least 25 minutes, preferably at least 30 minutes, preferably at least 35 minutes, preferably at least 40 minutes, preferably at least 45 minutes. Then, ethanol (C), the alkanolamine (D), and the silicone acrylate copolymer (E), along with any desired additive (G) may be added to the mixture with continued mixing for at least 5 minutes, preferably at least 10 minutes, preferably at least 15 minutes, preferably at least 20 minutes, preferably at least 25 minutes, preferably at least 30 minutes or otherwise until complete dissolution. The colorant (F) may then be added slowly with continued mixing for at least 10 minutes, preferably at least 15 minutes, preferably at least 20 minutes, preferably at least 25 minutes, preferably at least 30 minutes. The resulting inkjet ink may then be optionally filtered (e.g., through a 1.0 µm filter) and placed into a printing cartridge, such as HP45SI made by Hewlett Packard.

### Properties

Among other advantages, the inkjet inks disclosed herein possess a superior combination of extended decap times and quick dry times after being applied.

Dry times may be measured by applying the inkjet inks in the form of a solid block image (e.g., 1 cm * 10 cm) onto a substrate, waiting for the inkjet inks to dry under ambient conditions (in air at room temperature, about 23°C, without applied heat), for a certain period of time, for example at 5, 10, 15, or 20 seconds, and then performing an abrasion test by finger to test if color transfers from the printed image to the finger at the tested time interval (*see* e.g., Fig. 1). If color transfer occurs, then the tested dry time is not satisfactory to achieve complete drying and the inkjet ink is rated "NG" (No Good) at that time interval. If no color transfer occurs, then the tested dry time is satisfactory to achieve complete drying and the inkjet ink is rated "G" (Good) at that time interval. Any inkjet inks requiring dry times of over 15 seconds to achieve a "G" rating are considered unacceptable (slow drying), while those which achieve a "G" rating with dry times of 15 seconds or less are deemed acceptable (or quick drying). In preferred embodiments, the inkjet inks of the present disclosure have acceptable (quick) dry times, and dry within 15 seconds or less, preferably 10 seconds or less, preferably 5 seconds or less, more preferably 3 seconds or less after being applied.

The inkjet inks disclosed herein also possess extended decap times as measured by printing a narrow line image (e.g., barcode) (1 mm * 1 cm, narrow lines, Monochrome bitmap), exposing the inkjet ink to air (decapping the ink cartridge) for a particular time (e.g., 5, 10, 30, or 60 minutes), reprinting the same narrow line image, and comparing the reprinted image after decapping to the original image to determine if loss of lines/loss of line clarity occurs in the narrow line image (see e.g., Fig. 2). If no loss of lines/loss of line clarity occurs at the tested time interval, then the inkjet inks are given a "G" (Good) decap rating for that time interval. If 1-2 lines are lost/lost clarity at the tested time interval, but not enough to significantly affect the clarity or readability of the narrow line image, then the inkjet inks are given an "A" (Acceptable) decap rating for that time interval. If more than 2 lines are lost/lost clarity at the tested time interval, then the inkjet ink is given an "NG" (Not Good) decap rating for that time interval. Inkjet inks which maintain a "G" or "A" decap rating, preferably a "G" decap rating when decapped for 5 minutes or longer, preferably 10 minutes or longer, more preferably 30 minutes or longer, even more preferably 60 minutes or longer are considered desirable in terms of decap performance.

### Printed Article

The inkjet inks can be printed on various substrates including three dimensional parts as well as flat sheets or webs that are supplied in roll form, for the manufacture of a wide variety of printed articles. Additionally, the substrates may possess various surface types, for example, a flat surface, a structured surface, such as grained surfaces, and a three-dimensional surface, such as curved and/or complex surfaces, which are notoriously difficult substrates owing to the long distance that the ink must travel to reach all parts of the curved and/or complex surface. Such printed articles may be suitable in the graphic arts, textiles, packaging (e.g., food packaging, pharmaceutical packaging, etc.), lottery, direct mail, business forms and publishing industries, examples of which include a tag or label, a lottery ticket, a publication, packaging (e.g., food packaging, pharmaceutical packaging, blister packaging, other various flexible packaging, etc.), a folding carton, a rigid container (e.g., a plastic cup or tub, glass containers, metal cans, bottles such as PET bottles, jars, and tubes), envelopes, corrugate, a point-of-sale display, and the like.

The inkjet inks may be printed on porous (or penetrable) substrates, examples of which include, but are not limited to, non-coated paper (plain paper), wood, membranes, corrugate (corrugated cardboard/fiberboard), and fabrics (including, for example, but not limited to, woven fabric, non-woven fabric, and foil-laminated fabric).

The inkjet inks may also be printed on non-porous (or non-penetrable/non-penetration) substrates, for example, various plastics, glass, metals (e.g., steel, aluminum, etc.), and or non-penetration papers (e.g., coated papers such as varnish coated papers), including, but not limited to, molded plastic or metal parts as well a flat sheets or rolls of plastic or metallic films. Examples include those substrates containing polyesters such as polyethylene terephthalate (PET), biaxially oriented polystyrene (OPS), polyolefins such as polyethylene (PE), polypropylene (PP), oriented polypropylene (OPP), and biaxially oriented polypropylene (BOPP), polylactic acid (PLA), nylon and oriented nylon, polyvinyl chloride (PVC), cellulose triacetate (TAC), polycarbonate, acrylonitrile butadiene styrene (ABS), polyacetal, polyvinyl alcohol (PVA), coated papers such as varnish coated papers, and metals such as steel and aluminum, and the like. In preferred embodiments, the substrate is a PET film, one example of which is U292W made by Teijin.

### Method of forming_a Printed Image

With inkjet printing, a desired printed image is formed when a precise pattern of dots is ejected from a drop-generating device, known as a printhead, onto a print medium. The printhead has an array of precisely formed nozzles located on a nozzle plate and attached to an inkjet printhead substrate. The inkjet printhead substrate incorporates an array of firing chambers that receive inkjet ink through fluid communication with one or more ink reservoirs. Each firing chamber has a resistor element, known as a firing resistor, located opposite the nozzle so that the inkjet ink collects between the firing resistor and the nozzle. Each resistor element is typically a pad of a resistive material and measures for example about 35 µm × 35 µm. The printhead is held and protected by an outer packaging referred to as a print cartridge or an inkjet pen. Upon energizing of a particular resistor element, a droplet of inkjet ink is expelled through the nozzle toward the print medium. The firing of ink droplets is typically under the control of a microprocessor, the signals of which are conveyed by electrical traces to the resistor elements, forming alphanumeric and other image patterns on the print medium. Since the nozzles are small, typically 10 µm to 40 µm in diameter, inks that minimize clogging are desired. In particular, since thermal inkjet (TIJ) is an open atmosphere print head design (the nozzle orifices are open to atmosphere and there is no valve seal at the orifice to allow ink pressurization), TIJ printing has historically suffered from poor performance during intermittent printing, where decap time (print idle time) causes premature drying of ink in and around the nozzles.

The present disclosure provides a method of forming a printed image by applying the inkjet ink, in one or more of its embodiments, onto a surface of a substrate by a thermal inkjet printhead and allowing the inkjet ink to diy. Use of the inkjet inks described herein overcomes the competing problems of short decap time (rate of solvent loss is too fast) and slow drying times (rate of solvent loss is too slow) commonly associated with thermal inkjet processes, while still producing high quality prints.

Any drop on demand printhead known to those of ordinary skill in the art of inkjet printing can be used as printing units in the present method, including continuous printheads, thermal printheads, electrostatic printheads, and acoustic printheads, preferably a thermal printhead (having a thermal transducer) is used. Typical parameters, such as, for example, printing resolution, printing speed, printhead pulse warming temperature, driving voltage and 2pulse length, can be adjusted according to the specifications of the printhead. Printheads which are generally suitable for usage in the methods herein have a droplet size in the range of 2 to 80 pL and a droplet frequency in the range of 10 to 100 kHz, and high quality prints may be obtained for example by setting the driving voltage to 8.0 to 9.5 Volts, the print speed up to 300 feet/minute, the pulse warming temperature to 25 to 45°C, and the pulse length to 0.7-2.5 microseconds, although values above or below these described may also be used and still obtain satisfactory prints. One non-limiting printhead example suitable for use in the disclosed methods is HP45SI made by Hewlett Packard.

After application, the inkjet ink is dried. In preferred embodiments, drying is achieved by allowing the applied inkjet ink to dry under ambient conditions (in air, at about 23 °C) for 15 seconds or less, preferably 10 seconds or less, preferably 5 seconds or less, more preferably 4 seconds or less, even more preferably 3 seconds or less, yet even more preferably 2 seconds or less.

While external heat may be applied to dry the applied inkjet inks, in preferred embodiments, external heat is not applied to facilitate drying or to increase drying speeds (unassisted drying). For example, a heater is preferably not employed for drying the inkjet ink after application. Furthermore, the methods of the present disclosure do not require energy curing (e.g., UV or electron beam curing). Once the applied ink is deemed dry, further coatings of inkjet ink may be applied, or any processing steps known to those of ordinary skill in the art may be performed as desired.

It should also be recognized that substrate surface treatments such as corona treatment, atmospheric plasma treatment, and flame treatment may optionally be employed in the methods herein prior to application of the inkjet inks to improve printed article characteristics, for example ink adhesion. The parameters of such substrate surface treatments may be varied greatly depending on the substrate material to be printed, the specific inkjet ink utilized, the printing method applied, and the desired properties and applications of the printed article.

### EXAMPLES

### Inkjet inks

Several example inkjet inks are given in Tables 1 and 2. The amount of each component is expressed in terms of weight percentage relative to a total weight (100%) of the inkjet ink. The hydroxyl value (OHV) is expressed in terms of mgKOH/g. * denotes the example is a comparative example.

### Materials used

Glycol ether PM is propylene glycol monomethyl ether. BYK-3550 is a silicone acrylate copolymer, available from BYK Japan K.K.YS POLYSTER U130 (OHV = 25 mgKOH/g; SP = 130 °C), YS POLYSTER G125 (OHV = 135 mgKOH/g; SP = 125 °C), and YS POLYSTER N125 (OHV = 165 mgKOH/g; SP = 125 °C) are terpene phenol resins, available from Yasuhara Chemical Co. Ltd. DERTOPHENE T105 (OHV = 40 mgKOH/g; SP = 105 °C; Mw = 700 g/mol), DERTOPHENE T115 (OHV = 50 mgKOH/g; SP = 120 °C; Mw = 700 g/mol), and DERTOPHENE T160 (OHV = 60 mgKOH/g; SP = 160 °C), are terpene phenol resins available from DRT/Pinova. VALIFAST BLACK 3870, VALIFAST RED 1355, and VALIFAST YELLOW 3150 are azo-metal complex dyes available from Orient Chemical Industries Co., Ltd. OIL BLUE 613 is an organic dye, available from Orient Chemical Industries Co., Ltd.

**Table 1. Inkjet Ink Examples 1-10**

| | **Ex 1** | **Ex 2** | **Ex 3** | **Ex 4** | **Ex 5*** | **Ex 6*** | **Ex 7*** | **Ex 8*** | **Ex 9** | **Ex 10** |
|---|---|---|---|---|---|---|---|---|---|---|
| Ethanol | 71.50 | 71.50 | 71.50 | 71.50 | 71.50 | 71.50 | 71.50 | 66.50 | 71.50 | 71.50 |
| 1-Propanol | - | - | - | - | - | - | 18.00 | 18.00 | - | - |
| Glycol ether PM | - | - | - | - | - | - | - | 5.00 | - | - |
| Dimethyl carbonate (b.p. 90 °C) | 18.00 | 18.00 | 18.00 | 18.00 | 18.00 | 18.00 | - | - | - | - |
| Ethyl methyl carbonate (b.p. 107 °C) | - | - | - | - | - | - | - | - | 18.00 | - |
| Diethyl carbonate (b.p. 126 °C) | - | - | - | - | - | - | - | - | - | 18.00 |
| Isopropanolamine | 1.00 | 1.00 | 1.00 | 1.00 | 1.00 | 1.00 | 1.00 | 1.00 | 1.00 | 1.00 |
| BYK-3550 | 1.50 | 1.50 | 1.50 | 1.50 | 1.50 | 1.50 | 1.50 | 1.50 | 1.50 | 1.50 |
| YS POLYSTER U130 (OHV = 25) | 2.00 | - | - | - | - | - | 2.00 | 2.00 | - | - |
| DERTOPHENE T105 (OHV = 40) | - | 2.00 | - | - | - | - | - | - | 2.00 | 2.00 |
| DERTOPHENE T115 (OHV = 50) | - | - | 2.00 | - | - | - | - | - | - | - |
| DERTOPHENE T160 (OHV = 60) | - | - | - | 2.00 | - | - | - | - | - | - |
| YS POLYSTER G125 (OHV = 135) | - | - | - | - | 2.00 | - | - | - | - | - |
| YS POLYSTER N125 (OHV = 165) | - | - | - | - | - | 2.00 | - | - | - | - |
| VALIFAST BLACK 3870 | 6.00 | 6.00 | 6.00 | 6.00 | 6.00 | 6.00 | 6.00 | 6.00 | 6.00 | 6.00 |
| Total 100.00 | 100.00 | 100.00 | 100.00 | 100.00 | 100.00 | 100.00 | 100.00 | 100.00 | 100.00 | 100.00 |

| | | | | | | | | | | |
|---|---|---|---|---|---|---|---|---|---|---|
| * denotes the example is a comparative example | | | | | | | | | | |

**Table 2. Inkjet Ink Examples 11-18**

| | **Ex 11** | **Ex 12** | **Ex 13** | **Ex 14** | **Ex 15*** | **Ex 16** | **Ex 17** | **Ex 18** |
|---|---|---|---|---|---|---|---|---|
| Ethanol | 79.50 | 64.50 | 54.50 | 44.50 | 71.50 | 71.50 | 71.50 | 71.50 |
| Dimethyl carbonate (b.p. 90 °C) | 10.00 | 25.00 | 35.00 | 45.00 | - | 18.00 | 18.00 | 18.00 |
| Dipropyl carbonate (b.p. 168 °C) | - | - | - | - | 18.00 | - | - | - |
| Isopropanolamine | 1.00 | 1.00 | 1.00 | 1.00 | 1.00 | 1.00 | 1.00 | 1.00 |
| BYK-3550 | 1.50 | 1.50 | 1.50 | 1.50 | 1.50 | 1.50 | 1.50 | 1.50 |
| DERTOPHENE T105 (OHV = 40) | 2.00 | 2.00 | 2.00 | 2.00 | - | - | - | - |
| DERTOPHENE T115 (OHV = 50) | - | - | - | - | - | 2.00 | 2.00 | 2.00 |
| DERTOPHENE T160 (OHV = 60) | - | - | - | - | 2.00 | - | - | - |
| VALIFAST BLACK 3870 | 6.00 | 6.00 | 6.00 | 6.00 | 6.00 | - | - | - |
| VALIFAST RED 1355 | - | - | - | - | - | 6.00 | - | - |
| VALIFAST YELLOW 3150 | - | - | - | - | - | - | 6.00 | - |
| OIL BLUE 613 | - | - | - | - | - | - | - | 6.00 |
| Total | 100.00 | 100.00 | 100.00 | 100.00 | 100.00 | 100.00 | 100.00 | 100.00 |

| | | | | | | | | |
|---|---|---|---|---|---|---|---|---|
| * denotes the example is a comparative example | | | | | | | | |

### Preparation methods

To prepare the example inkjet inks, the terpene phenol resin was first combined with the indicated carbonate ester, the 1-propanol, and/or the glycol ether, and mixed by magnetic stirrer for at least 30 minutes. The ethanol, neutralization reagent (isopropanolamine) and silicon acrylate copolymer were then added to the mixture, and mixed for at least 15 minutes or until complete dissolution. The colorant was next added slowly with mixing, and the resulting mixture was mixed for at least 30 minutes. The prepared inkjet inks were then placed into a HP45SI cartridge made by Hewlett Packard.

### Inkjet ink evaluation methods

### Printing sample preparation

Thermal printing technology related to Hewlett Packard was used to evaluate the inks (Software and hardware made by Inc.jet, Transport table made by Kirk Rudy).

### Dry time evaluation

For evaluating dry times, the printing conditions utilized were as follows:
- Non-penetration printing substrate; a white PET film (U292W made by TEIJIN).
- Printing resolution; 300 dpi * 300 dpi (vertical*horizontal)
- Printing speed; 150 feet/minute
- Driving voltage; 8.4 V
- Pulse length; 1.80 µs
- Pulse warming temperature; OFF
- Printing image; 100% duty (1 cm * 10 cm, Monochrome bitmap, solid block image)(see e.g., Fig. 1)
- Condition; 25°C, 30% humidity

The solid block image was printed according to the conditions above, and an abrasion test was done by the finger after allowing the inkjet ink to dry for a specific time interval (5, 10, 15, and 20 sec). A colored finger indicates not enough time had lapsed for complete drying and the inkjet ink was given a "NG" (No Good) rating at that time interval. A non-colored finger indicates the time was adequate for complete drying and the inkjet ink was given a "G" (Good) rating at that time interval. Inkjet inks requiring a drying time of over 15 seconds to achieve a "G" rating were deemed unacceptable (slow drying) and inkjet inks which dried in 15 seconds or less were deemed acceptable (quick drying).

### Decap time evaluation

For evaluating decap times, the printing conditions utilized were as follows:
- Printing substrate; non-coated paper (plain paper)
- Printing resolution; 300 dpi * 300 dpi (vertical*horizontal)
- Printing speed; 150 feet/minute
- Driving voltage; 8.4 V
- Pulse length; 1.80 µs
- Pulse warming temperature; OFF
- Printing image; 100% duty (1 mm * 1 cm, Monochrome bitmap, narrow line image)(*see* e.g., Fig. 2)
- Condition; 25°C, 30% humidity

The narrow line image was printed to confirm that there were no missing or unclear lines included in the printed image (signifying plugged or missing nozzles). After confirming, the printhead was left decapped for a specific time (5, 10, 30, or 60 minutes), then reprinted using the same narrow line image. The reprinted image (after the specific time lapse) was checked to determine whether loss of lines/loss of line clarity occurred. If no loss of lines/loss of line clarity occurred at the tested time interval, then the inkjet ink was given a "G" (Good) decap rating for that time interval. If 1-2 lines were lost/lost clarity at the tested time interval, but not enough to significantly affect the clarity or readability of the narrow line image, then the inkjet ink was given an "A" (Acceptable) decap rating for that time interval. If more than 2 lines were lost/lost clarity at the tested time interval, then the inkjet ink was given an "NG" (Not Good) decap rating for that time interval. Suitable/desirable inkjet inks are those which maintain a "G" or an "A" decap classification when decapped (i.e., exposed to air) for each of the tested time intervals.

### Inkjet ink performance

**Table 3. Inkjet Ink Performance of Examples 1-18**

| Ink | | **Ex 1** | **Ex 2** | **Ex 3** | **Ex 4** | **Ex 5*** | **Ex 6*** | **Ex 7*** | **Ex 8*** | **Ex 9** | **Ex 10** | **Ex 11** | **Ex 12** | **Ex 13** | **Ex 14** | **Ex 15*** | **Ex 16** | **Ex 17** | **Ex 18** |
|---|---|---|---|---|---|---|---|---|---|---|---|---|---|---|---|---|---|---|---|
| Printer Condition | | Inc.jet HP45SI table, 8.4V/1.8 µs/ pulse warming off, 150 fpm | | | | | | | | | | | | | | | | | |
| Dry time (sec) 300*300 dpi, 100% duty, Non-penetration substrate | 5 | G | G | G | G | NG | NG | NG | NG | NG | NG | G | G | NG | NG | NG | G | G | G |
| | 10 | G | G | G | G | G | G | NG | NG | G | G | G | G | G | NG | NG | G | G | G |
| | 15 | G | G | G | G | G | G | **NG** | **NG** | G | G | G | G | G | G | **NG** | G | G | G |
| | 20 | G | G | G | G | G | G | G | **NG** | G | G | G | G | G | G | **NG** | G | G | G |
| Decap (open) time (min) 300*300 dpi Narrow line image | 5 | G | G | G | G | **NG** | **NG** | G | G | G | G | A | G | G | A | G | G | G | G |
| | 10 | G | G | G | G | **NG** | **NG** | G | G | G | G | G | G | G | A | A | G | G | A |
| | 30 | G | G | G | A | **NG** | **NG** | G | G | G | G | G | G | G | A | A | G | A | A |
| | 60 | G | G | G | A | **NG** | **NG** | A | G | G | G | G | A | A | A | A | G | A | A |

As shown in Table 3, inkjet inks containing a terpene phenol resin having a OHV of 10 to 80 mgKOH/g were found to possess advantageous decap behavior, with "G" or "A" decap ratings for each of the tested time intervals (Examples 1-4 and 7-18). Conversely, inkjet inks which were formulated with terpene phenol resins having hydroxyl values outside of this range suffered from unacceptable decap times at all decap times tested (Examples 5 and 6).

As to drying times, inkjet inks formulated with a carbonate ester whose boiling point is less than 150 °C were found to be fast drying, with drying times of 15 seconds or less (Examples 1-6, 9-14, and 16-18). In terms of the quantity of carbonate ester whose boiling point is less than 150 °C, even low amounts were found to be sufficient for fast drying inkjet inks (Example 11, with a 10 wt. % loading of carbonate ester). Higher loadings of carbonate ester, such as 35 wt. % in Example 13, and 45 wt. % in Example 14, also provided acceptable drying properties, although a 45 wt. % loading of the carbonate ester was found to require >10-15 seconds for adequate drying (Example 14).

As can be seen in Table 3, when an appropriate amount of carbonate ester having a boiling point of less than 150 °C was used in combination with a terpene phenol resin having a hydroxyl value of 10 to 80 mgKOH/g, remarkable effects were achieved in terms of both dry times and decap times (Examples 1-4, 9-14, and 16-18).

On the other hand, inkjet inks in which carbonate ester having a boiling point of less than 150 °C was replaced with 1-propanol (b.p. = 97 °C) (Example 7), or a combination of 1-propanol (b.p. = 97 °C) and propylene glycol monomethyl ether as humectant (Example 8) provided poor inkjet ink drying speeds. Furthermore, the use of higher boiling carbonate esters such as dipropyl carbonate (b.p. 168 °C) also gave poor results in terms of inkjet ink drying speeds (Example 15).

Where a numerical limit or range is stated herein, the endpoints are included. Also, all values and subranges within a numerical limit or range are specifically included as if explicitly written out.

As used herein the words "a" and "an" and the like carry the meaning of "one or more.''

Obviously, numerous modifications and variations of the present invention are possible in light of the above teachings. It is therefore to be understood that, within the scope of the appended claims, the invention may be practiced otherwise than as specifically described herein.

## Claims

1. An inkjet ink, comprising:
(A) a terpene phenol resin having a hydroxyl value of 10 to 80 mgKOH/g; and
(B) a carbonate ester whose boiling point is less than 150 °C.

2. The inkjet ink of claim 1, wherein the terpene phenol resin (A) is a copolymer formed from a reaction between a monoterpene and a phenolic compound comprising at least one hydroxyl group and at least two replaceable hydrogen atoms in ortho- and/or para-positions with respect to the at least one hydroxyl group.

3. The inkjet ink of claim 2, wherein the monoterpene is at least one bicyclic monoterpene selected from the group consisting of 3-carene, α-pinene, β-pinene, and camphene.

4. The inkjet ink of claim 2, wherein the phenolic compound is phenol.

5. The inkjet ink of any one of claims 1 to 4, wherein the terpene phenol resin (A) is present in an amount of 0.1 to 10 wt. %, based on a total weight of the inkjet ink.

6. The inkjet ink of any one of claims 1 to 5, wherein the carbonate ester (B) is present in an amount of 5 to 50 wt. %, based on a total weight of the inkjet ink.

7. The inkjet ink of any one of claims 1 to 6, wherein a weight ratio of the carbonate ester (B) to the terpene phenol resin (A) ((B):(A)) is 2:1 to 25:1.

8. The inkjet ink of any one of claims 1 to 7, further comprising (C) ethanol.

9. The inkjet ink of claim 8, wherein the ethanol (C) is present in an amount of 40 to 85 wt. %, based on a total weight of the inkjet ink

10. The inkjet ink of claim 8 or 9, wherein a weight ratio of the carbonate ester (B) to ethanol (C) ((B)/(C)) is 0.05:1 to 0.80:1.

11. The inkjet ink of any one of claims 1 to 10, further comprising (D) an alkanolamine, wherein the alkanolamine (D) is present in an amount of 0.1 to 10 wt. %, based on a total weight of the inkjet ink.

12. The inkjet ink of claim 11, wherein the alkanolamine (D) is at least one selected from the group consisting of ethanolamine, propanolamine, isopropanolamine, diethanolamine, and triethanolamine.

13. The inkjet ink of any one of claims 1 to 12, further comprising (E) a silicone acrylate copolymer, wherein the silicone acrylate copolymer (E) is optionally present in an amount of up to 5 wt. %, based on a total weight of the inkjet ink.

14. The inkjet ink of any one of claims 1 to 13, further comprising (F) a colorant.

15. A method of forming a printed image on a substrate, comprising:
applying the inkjet ink of any one of claims 1 to 14 onto the substrate with a thermal inkjet printhead; and
drying the inkjet ink.

## Patentansprüche

1. Tintenstrahltinte, umfassend:
(A) ein Terpenphenolharz mit einer Hydroxylzahl von 10 bis 80 mgKOH/g; und
(B) einen Carbonatester, dessen Siedepunkt weniger als 150°C beträgt.

2. Tintenstrahltinte gemäß Anspruch 1, wobei das Terpenphenolharz (A) ein Copolymer, gebildet durch eine Reaktion zwischen einem Monoterpen und einer phenolischen Verbindung, umfassend mindestens eine Hydroxylgruppe und mindestens zwei ersetzbare Wasserstoffatome in ortho- und/oder para-Stellung, bezogen auf die mindestens eine Hydroxylgruppe, ist.

3. Tintenstrahltinte gemäß Anspruch 2, wobei das Monoterpen mindestens ein bicyclisches Monoterpen ist, das aus der Gruppe ausgewählt ist, die aus 3-Caren, α-Pinen, β-Pinen und Camphen besteht.

4. Tintenstrahltinte gemäß Anspruch 2, wobei die phenolische Verbindung Phenol ist.

5. Tintenstrahltinte gemäß einem der Ansprüche 1 bis 4, wobei das Terpenphenolharz (A) in einer Menge von 0,1 bis 10 Gew.-%, bezogen auf ein Gesamtgewicht der Tintenstrahltinte, vorhanden ist.

6. Tintenstrahltinte gemäß einem der Ansprüche 1 bis 5, wobei der Carbonatester (B) in einer Menge von 5 bis 50 Gew.-%, bezogen auf ein Gesamtgewicht der Tintenstrahltinte, vorhanden ist.

7. Tintenstrahltinte gemäß einem der Ansprüche 1 bis 6, wobei ein Gewichtsverhältnis von dem Carbonatester (B) zu dem Terpenphenolharz (A) ((B):(A)) 2:1 bis 25:1 beträgt.

8. Tintenstrahltinte gemäß einem der Ansprüche 1 bis 7, ferner umfassend (C) Ethanol.

9. Tintenstrahltinte gemäß Anspruch 8, wobei Ethanol (C) in einer Menge von 40 bis 85 Gew.-%, bezogen auf ein Gesamtgewicht der Tintenstrahltinte, vorhanden ist.

10. Tintenstrahltinte gemäß Anspruch 8 oder 9, wobei ein Gewichtsverhältnis von dem Carbonatester (B) zu Ethanol (C) ((B)/(C)) 0,05:1 bis 0,80:1 beträgt.

11. Tintenstrahltinte gemäß einem der Ansprüche 1 bis 10, ferner umfassend (D) ein Alkanolamin, wobei das Alkanolamin (D) in einer Menge von 0,1 bis 10 Gew.-%, bezogen auf ein Gesamtgewicht der Tintenstrahltinte, vorhanden ist.

12. Tintenstrahltinte gemäß Anspruch 11, wobei das Alkanolamin (D) mindestens eines ist, das aus der Gruppe ausgewählt ist, die aus Ethanolamin, Propanolamin, Isopropanolamin, Diethanolamin und Triethanolamin besteht.

13. Tintenstrahltinte gemäß einem der Ansprüche 1 bis 12, ferner umfassend (E) ein Siliconacrylatcopolymer, wobei das Siliconacrylatcopolymer (E) optional in einer Menge von bis zu 5 Gew.-%, bezogen auf ein Gesamtgewicht der Tintenstrahltinte, vorhanden ist.

14. Tintenstrahltinte gemäß einem der Ansprüche 1 bis 13, ferner umfassend (F) ein Färbemittel.

15. Verfahren zum Erzeugen eines gedruckten Bildes auf einem Substrat, umfassend:
das Aufbringen der Tintenstrahltinte gemäß einem der Ansprüche 1 bis 14 auf das Substrat mit einem thermischen Tintenstrahldruckkopf; und
das Trocknen der Tintenstrahltinte.

## Revendications

1. Encre pour jet d'encre, comprenant :
(A) une résine de terpène phénol présentant une valeur hydroxyle entre 10 et 80 mgKOH/g ; et
(B) un ester de carbonate dont le point d'ébullition est inférieur à 150 °C.

2. Encre pour jet d'encre selon la revendication 1, dans laquelle la résine de terpène phénol (A) est un copolymère formé à partir d'une réaction entre un monoterpène et un composé phénolique comprenant au moins un groupe hydroxyle et au moins deux atomes d'hydrogène remplaçables en positions ortho et/ou para par rapport à l'au moins un groupe hydroxyle.

3. Encre pour jet d'encre selon la revendication 2, dans laquelle le monoterpène est au moins un monoterpène bicyclique sélectionné parmi le groupe constitué par le 3-carène, l'α-pinène, le β-pinène, et le camphène.

4. Encre pour jet d'encre selon la revendication 2, dans laquelle le composé phénolique est un phénol.

5. Encre pour jet d'encre selon l'une quelconque des revendications 1 à 4, dans laquelle la résine de terpène phénol (A) est présente dans une proportion de 0,1 à 10 % en poids, par rapport au poids total de l'encre pour jet d'encre.

6. Encre pour jet d'encre selon l'une quelconque des revendications 1 à 5, dans laquelle l'ester de carbonate (B) est présent dans une proportion de 5 à 50 %. en poids, par rapport à un poids total de l'encre pour jet d'encre.

7. Encre pour jet d'encre selon l'une quelconque des revendications 1 à 6, dans laquelle un rapport en poids entre l'ester de carbonate (B) et la résine de terpène phénol (A) ((B):(A)) est entre 2:1 et 25:1.

8. Encre pour jet d'encre selon l'une quelconque des revendications 1 à 7, comprenant en outre (C) de l'éthanol.

9. Encre pour jet d'encre selon la revendication 8, dans laquelle l'éthanol (C) est présent dans une proportion de 40 à 85 % en poids, par rapport à un poids total de l'encre pour jet d'encre.

10. Encre pour jet d'encre selon la revendication 8 ou 9, dans laquelle un rapport en poids entre l'ester de carbonate (B) et l'éthanol (C) ((B)/(C)) est entre 0,05:1 et 0,80:1.

11. Encre pour jet d'encre selon l'une quelconque des revendications 1 à 10, comprenant en outre (D) une alcanolamine, dans laquelle l'alcanolamine (D) est présente dans une proportion de 0,1 à 10 % en poids, par rapport à un poids total de l'encre pour jet d'encre.

12. Encre pour jet d'encre selon la revendication 11, dans laquelle l'alcanolamine (D) est au moins un composé sélectionné parmi le groupe constitué par l'éthanolamine, la propanolamine, l'isopropanolamine, la diéthanolamine, et la triéthanolamine.

13. Encre pour jet d'encre selon l'une quelconque des revendications 1 à 12, comprenant en outre (E) un copolymère d'acrylate de silicone, dans laquelle le copolymère d'acrylate de silicone (E) est facultativement présent dans une proportion allant jusqu'à 5 % en poids, par rapport à un poids total de l'encre pour jet d'encre.

14. Encre pour jet d'encre selon l'une quelconque des revendications 1 à 13, comprenant en outre (F) un colorant.

15. Procédé de formation d'une image imprimée sur un substrat, comprenant :
une application de l'encre pour jet d'encre selon l'une quelconque des revendications 1 à 14 sur le substrat avec une tête d'impression à jet d'encre thermique ; et
un séchage de l'encre pour jet d'encre.
